Europäisches Patentamt

European Patent Office

Office européen des brevets

(19)

(11)  EP 0 795 121 B1

(12)  EUROPÄISCHE PATENTSCHRIFT

(45) Veröffentlichungstag und Bekanntmachung des Hinweises auf die Patenterteilung:
**12.11.2003  Patentblatt 2003/46**

(51) Int Cl.[7]: **G01J 9/02**, H01S 3/13, G01J 3/18

(21) Anmeldenummer: **96924729.5**

(22) Anmeldetag: **07.08.1996**

(86) Internationale Anmeldenummer:
**PCT/CH96/00275**

(87) Internationale Veröffentlichungsnummer:
**WO 97/009594 (13.03.1997 Gazette 1997/12)**

(54) **VERFAHREN UND VORRICHTUNG ZUR MESSUNG VON LICHTBÜNDELN**

PROCESS AND DEVICE FOR MEASURING LIGHT BEAMS

PROCEDE ET DISPOSITIF PERMETTANT DE MESURER DES FAISCEAUX LUMINEUX

(84) Benannte Vertragsstaaten:
**CH DE GB LI**

(30) Priorität: **01.09.1995  CH 249695**

(43) Veröffentlichungstag der Anmeldung:
**17.09.1997  Patentblatt 1997/38**

(73) Patentinhaber: **PAUL SCHERRER INSTITUT**
**5232 Villingen PSI (CH)**

(72) Erfinder:
• **KUNZ, Rino, Ernst**
  **CH-8162 Steinmaur (CH)**
• **DUEBENDORFER, Jürg**
  **CH-8032 Zürich (CH)**

(74) Vertreter: **Troesch Scheidegger Werner AG**
**Patentanwälte**
**Postfach**
**8032 Zürich (CH)**

(56) Entgegenhaltungen:
**US-A- 5 319 435**

• **SENSORS AND ACTUATORS B, Bd. 11, 1993, Seiten 167-176, XP002019156 R.E. KUNZ: "Gradient effective indes waveguide sensors"**
• **WOLFGANG DEMTRÖDER: "Laserspetroskopie: Grundlagen und Anwendungen" , SPRINGER-VERLAG , DE,BERLIN XP002019157 siehe Seite 189 - Seite 190**
• **OPTICS LETTERS, Bd. 20, Nr. 22, 15.November 1995, Seiten 2300-2302, XP000537157 R.E.KUNZ ET AL.: "Miniature integrated-optical wavelength analyzer chip"**
• **YUN-JIANG RAO: 'In-Fibre Bragg grating sensors' MEAS. SCI. TEHCNOLOGY B 1997, Seiten 355 - 375**

**Beschreibung**

Die vorliegende Erfindung betrifft ein Verfahren sowie Mittel zur Durchführung des Verfahrens gemäss dem Oberbegriff von Patentanspruch 1.

Es sind eine Reihe von optischen Sensoren zur Bestimmung von Werten von einer oder mehreren zu messenden Grössen bekannt.

Insbesondere für die Messung von Lichtbündeln sind Spektrometer bekannt, welche die Lichtbündel auffächern, beispielsweise mittels Prismen oder Gittern.

Die Messung mit herkömmlichen Spektrometern weist den Nachteil auf, dass es in der Regel ein aufwendiges Verfahren ist und mit teuren Geräten durchgeführt wird. Ferner handelt es sich um eine nicht zerstörungsfreie Messung, d.h. das Lichtbündel wird für und während der Messung praktisch zerstört. Damit kann keine Messung eines sich in Betrieb befindlichen Lichtbündels durchgeführt werden, resp. muss der Betrieb für die Messung unterbrochen werden, respektive muss mit einem sogenannten Strahlteiler ein Teil des Lichtbündels separat abgetrennt und auf eine kleine Eintrittsöffnung abgebildet werden.

So ist durch R.E.Kunz "Gradient effective index waveguide sensors", Sensors and Actuators B, 11 (1993) 167 - 176, bekannt, Eigenschaften eines Mediums durch die Messung der Position eines in einen Wellenleiter geführten Lichtstrahls zu bestimmen, bei welchem insbesondere seine Wellenlänge bekannt resp. konstant sein muss. Dabei werden Resonanzbedingungen im Wellenleiter, hervorgerufen durch unterschiedlichen Dicken des Wellenleiters in einer Achse, ausgenutzt. Bei dieser Methode wird der Lichtstrahl vollständig als Messmedium genutzt, also eine zerstörende Messung in Bezug auf den Lichtstrahl durchgeführt.

Die Aufgabe der vorliegenden Erfindung bestand darin, ein Verfahren für die Messung der Wellenlänge eines Lichtbündels zu finden, welches insbesondere wenigstens eine zerstörungsarme Messung einfach und mit geringen technischen Mitteln erlaubt.

Diese Aufgabe wird erfindungsgemäss durch die Kennzeichen nach Anspruch 1 gelöst.

Das erfindungsgemässe Messverfahren hat einerseits den grossen Vorteil, dass nur ein kleiner Bruchteil des Lichtbündels für die Messung verwendet wird, d.h. nur ein kleiner Intensitätsverlust des Lichtbündels auftritt. Damit kann auch ein in Betrieb stehendes Lichtbündel gemessen werden, ohne dass ein merklicher Intensitätsverlust auftritt, d.h. die Messung kann während des Betriebes erfolgen. Weiter kann die Messung mit sehr einfachen und preisgünstigen Mitteln erfolgen. So eignet sich das Verfahren insbesondere für die Bestimmung der Wellenlänge, indem alle Parameter ausser dem zu messenden Wert konstant gehalten werden.

Weitere bevorzugte Ausführungsformen der Erfindung ergeben sich aus den abhängigen Ansprüchen 2 bis 12.

Das erfindungsgemässe Verfahren eignet sich für die Realisierung eines kompakten miniaturisierten Wellenlängen-Messgerätes mit einem hohen Auflösungsgrad. Derartige Messgeräte können für die Messung oder Ueberwachung von Lichtquellen wie beispielsweise Laser-Lichtquellen verwendet werden.

Ausführungsbeispiele der Erfindung werden nachstehend anhand von Zeichnungen noch näher erläutert. Es zeigen

Fig. 1 schematisch die Ansicht einer Vorrichtung zur Durchführung des erfindungsgemässen Verfahrens;

Fig. 2 die Aufsicht auf einen Wellenleiter nach Fig. 1; Fig. 3 das Schema einer nach dem erfindungsgemässen Verfahren geregelten monochromaten Lichtquelle;

Fig. 4 qualitativ die Charakteristik der Zeigerposition einer Laserdiode in Abhängigkeit der Temperatur und Wellenlänge;

Fig. 5 eine total integrierte Version einer Vorrichtung zur Durchführung des erfindungsgemässen Verfahrens, bei der anstelle eines Auskoppelgitters direkt ein Detektor im Wellenleiter und die zugehörige Auswerte-Einheit auf dem selben Substrat integriert sind;

Fig. 6 einen Querschnitt durch eine monolithische Version, bei welcher der Wellenleiter mittels einer Pufferschicht mit dem eigentlichen Substrat verbunden ist;

Fig. 7 eine Anwendung des erfindungsgemässen Verfahrens zum Ausrichten eines Werkstückes relativ zu einem Laserstrahl; und

Fig. 8 eine kompakte, mittels des erfindungsgemässen Verfahrens geregelte Lichtquelle.

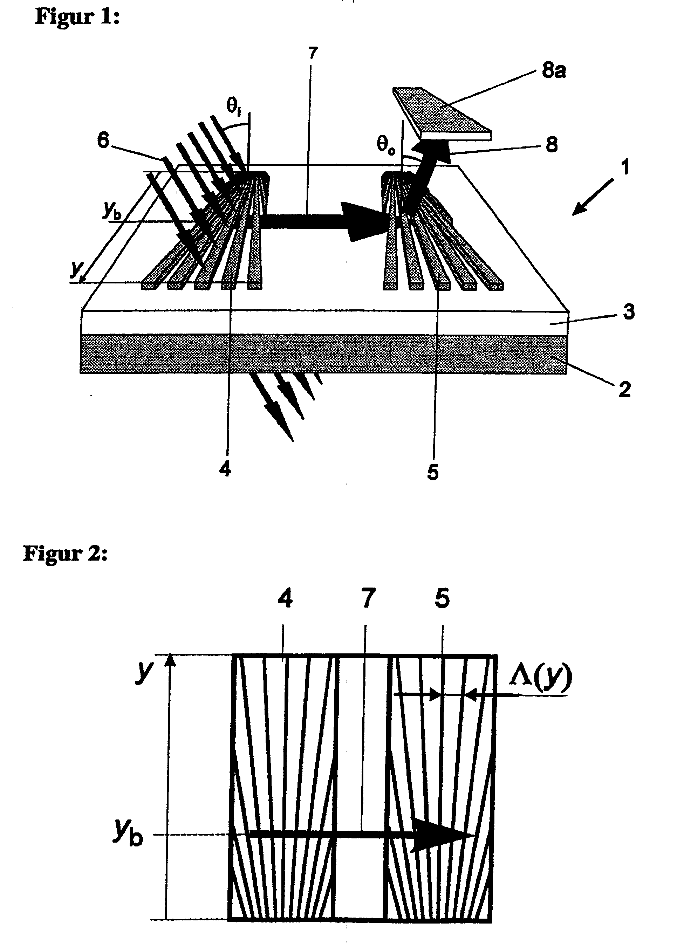

In Figur 1 ist eine Vorrichtung 1 dargestellt, welche für die Durchführung des erfindungsgemässen Verfahrens besonders gut geeignet ist. Der Grundaufbau der Vorrichtung 1 besteht aus einem Substrat 2, auf welchem ein dünner Film als Wellenleiter 3 aufgebracht ist. Dabei weist das Substrat 2 einen Brechungsindex $n_s$ bei einer Dicke $h_s$ auf. Der Wellenleiter 3 weist einen Brechungsindex $n_f$ bei einer Dicke $h_f$ auf. Auf der Oberseite des Wellenleiters 3 sind zwei voneinander beabstandete Gitterfelder 4 und 5 aufgebracht. Vorzugsweise weisen diese beide Gitterfelder 4,5 örtlich unterschiedliche Resonanzbedingungen auf, d.h. der Abstand der einzelnen Gitterelemente untereinander wird entlang der Feldtiefe verringert, resp. vergrössert. Damit wird eine von der Feldertiefe y abhängige Periodiziät $\Lambda(y)$ erzielt. Weiter ist der Brechungsindex $n_c$ der oberhalb der Gitterfelder befindlichen Umgebungsschicht ebenfalls bekannt, resp. definiert.

Die Vorrichtung 1, d.h. insbesondere das Gitterfeld 4, wird nun mit einem Lichtbündel 6 beaufschlagt, welches unter dem Winkel $\theta_i$ in die Vorrichtung 1 eintritt. Wenn nun dieses Lichtbündel ein monochromatisches Lichtbündel, beispielsweise ein Laserstrahl ist, so wird an einer bestimmten Stelle $y_b$ im Wellenleiter 3 eine Lichtwelle 7 durch Resonanzanregung erzeugt, welche sich innerhalb des Wellenleiters 3 fortpflanzt. Wenn nun beispielsweise die Wellenlänge des Lichtbündels 6 verändert wird, so wandert auch diese Lichtwelle 7 parallel entlang der Achse y. Die Lichtwelle 7 erzeugt an der Stelle des zweiten Gitterfeldes 5 ein Ausgangsbündel 8, welches aus dem Wellenleiter 3 unter einem bestimmten Winkel $\theta_o$ austritt. Dieser kann beispielsweise durch Erfassung des Auftreffpunktes des Ausgangsbündels 8 auf einen Detektor 8a bestimmt werden.

Für die Anregung und Erzeugung der Lichtwelle 7 wird nur ein sehr kleiner Energieanteil des Lichtbündels 6 benötigt, weshalb dieser praktisch unverändert durch die Vorrichtung 1 hindurchgeführt wird.

Bei einem polychromatischen Lichtbündel werden mehrere solcher Lichtwellen 7 an den entsprechenden, wellenlängenabhängigen Positionen erzeugt. Die Superposition dieser Lichtwellen 7 erzeugt eine räumliche Variation der Intensität des am Gitterfeld 5 aus dem Wellenleiter 3 austretenden Ausgangsbündels 8. Diese Intensitätsverteilung dient als Mass für die spektrale Zusammensetzung des auf den Wellenleiter einfallenden Lichtbündels 6. Um diese Verteilung und/ oder die Position $y_b$ resp. den Austrittswinkel $\theta_o$ zu erfassen, kann das Ausgangsbündel 8 beispielsweise auf einen Photodetektor 8a geführt werden.

In Figur 2 ist nun die Aufsicht auf eine Vorrichtung 1 nach Figur 1 dargestellt. Die beiden Gitterfelder 4 und 5 weisen hier eine lineare Gitter-Variation auf. D. h. die Periodizität $\Lambda(y)$ des Gitters 4 ändert sich linear bezüglich der Achse y. Ein weiterer Vorteil des erfindungsgemässen Verfahrens liegt darin, nichtlineare Kennlinien einfach dadurch zu realisieren, dass ein entsprechender nichtlinearer Verlauf $\Lambda(y)$ der Gitterlinien gewählt wird. Damit kann die Charakteristik der Vorrichtung der jeweiligen Anwendung optimal angepasst werden. Zum Beispiel können so Bereiche mit höchster Empfindlichkeit kombiniert werden mit Bereichen hoher Dynamik. Dies ist vor allem interessant für Überwachungsaufgaben, wo z.B. die Wellenlänge $\lambda$ oder der Winkel $\theta_i$ in einem Soll-Bereich genau gemessen bzw. geregelt werden soll, jedoch bei grösseren Abweichungen noch zuverlässige Signale "viel zu hoch" bzw. "viel zu tief" erhalten werden.

Für den oben dargestellten Vorgang werden alle massgebenden Parameter bis auf die zu messende Grösse konstant gehalten. Insbesondere wird der Brechungsindex $n_c$ der Umgebung oberhalb der Gitterfelder 4 und 5 konstant gehalten. Dies kann beispielsweise durch Aufbringen einer transparenten Deckschicht oberhalb dieser Felder 4,5 erfolgen.

Wenn das Lichtbündel 6 unter einem bestimmten, fixen Winkel $\theta_i$ auf die Vorrichtung 1 trifft, so werden die Photonen an der Position $y = y_b$ in den Wellenleiter eingekoppelt, wo die lokale Gitterperiode $\Lambda(y_b)$ die Resonanzbedingung für die Einkopplung erfüllt. Dies führt zur wellenlängenabhängigen Resonanzperiodizität des Gitterfeldes:

$$\Lambda = \Lambda(\lambda) = m_g \lambda / [N(\lambda) - n_c \sin \theta_i]$$

Hierbei bezeichnet $m_g$ die Beugungsordnung. Zur Vereinfachung kann vorzugsweise eine lineare Gitter-Variation angenommen werden, was unter Zuhilfenahme eines Variations-Gradienten $g_\lambda$ zu folgender Formel führt:

$$\Lambda = \Lambda_0 + g_\Lambda {}^* y \,,$$

wobei hier $\Lambda_0$ die Periodizität an der Stelle y = 0 ist. Dies führt nun zu folgender Charakteristik des erfindungsgemässen Verfahrens, resp. der erfindungsgemäss ausgebildeten Wellenleiteranordnung :

$$y = y_b(\lambda) = [\Lambda(\lambda) - \Lambda_0] / g_\Lambda$$

Durch die Ableitung dieses Wertes wird die Empfindlichkeit für die Wellenlängen-Bestimmung der Wellenleiteranordnung erhalten :

$$y' \equiv \frac{dy}{d\lambda} = \left(\frac{dy}{d\Lambda}\right) {}^* \left(\frac{d\Lambda}{d\lambda}\right) = \frac{\Lambda}{\lambda {}^* g_\Lambda} {}^* \left(1 - \frac{N'{}^* \Lambda}{m_g}\right),$$

wobei N' die Ableitung $dN/d\lambda$ der effektiven Brechzahl N bedeutet.

Wie aus den Formeln ersichtlich ist, wird keine Winkel-Positions-Umrechnung benötigt, wodurch auch Grössen wie beispielsweise die effektive Brennweite im Gegensatz zu bekannten Spektrometer-Verfahren, keine Rolle spielen. Einzig die Position $y_b$ ist ein direktes Mass für die zu messende Grosse, vorzugsweise der Wellenlänge oder des Einfallswinkels des Lichtbündels. Diese Position kann auf einfachste weise, wie bereits dargelegt, beispielsweise mittels Photodetektoren erfasst und danach ausgewertet werden.

Es ist klar, dass die Resonanzbedingung auch anders als durch die örtliche Variation des Gitters 4 resp. 5 erzielt werden kann. Beispielsweise kann auch die Dicke des Wellenleiters 3 oder die Brechzahl $n_f$ des Wellenleiters und/oder der angrenzenden Medien ($n_c/n_s$) örtlich variiert werden, um örtlich variierende Resonanzbedingungen analog zum oben geschilderten zu erhalten. Ebenfalls denkbar ist die Erzielung von zeitlich variierenden Resonanzbedingungen. Dabei könnten beispielsweise Gitterfelder 4,5 mit parallel angeordneten Gitterlinien zu Verwendung kommen, wobei beispielsweise der Brechungsindex $n_c$ der Umgebung oberhalb der Gitterfelder 4,5 zeitlich variiert werden kann, beispielseise mittels elektromagnetischen Feldern oder temperaturgeregelten resp. gesteuerten Flüssigkristallen.

Für viele Anwendungen liegt ein grosser Vorteil des dargestellten Messverfahrens darin, dass das Lichtbündel 6 praktisch unverändert durch die Vorrichtung 1 hindurchgeführt werden kann. Die für die Anregung der Lichtwelle 7 benötigte Energie kann im Vergleich zur Gesamtenergie des Lichtbündels 6 derart klein gehalten werden, dass dieser Verlust für praktische Anwendungen nicht ins Gewicht fällt. Dies hat nun den Vorteil, dass eine erfindungsgemässe Messung während des Gebrauchs des Lichtbündels durchgeführt werden kann, beispielsweise während des Einsatzes eines Laser-Lichtbündels für die Materialbearbeitung oder für Schreibzwecke zur Datenspeicherung. Bei herkömmlichen Messverfahren, insbesondere der herkömmlichen Spektralanalyseverfahren, tritt das gesamte Lichtbündel durch eine kleine Öffnung in das Spektrometer ein und wird während der Messung praktisch zerstört und kann deshalb nicht anderweitig genutzt werden. Gerade die Messung von in Betrieb stehenden Lichtbündeln macht das dargestellte Verfahren für manche praktische Anwendungen interessant.

Weiter fallen jegliche Arten von Linsen oder anderen Lichtbündel- oder -fokusiereinrichtungen weg, welche in der Regel einerseits teuer und andererseits empfindlich in der Justierung sind.

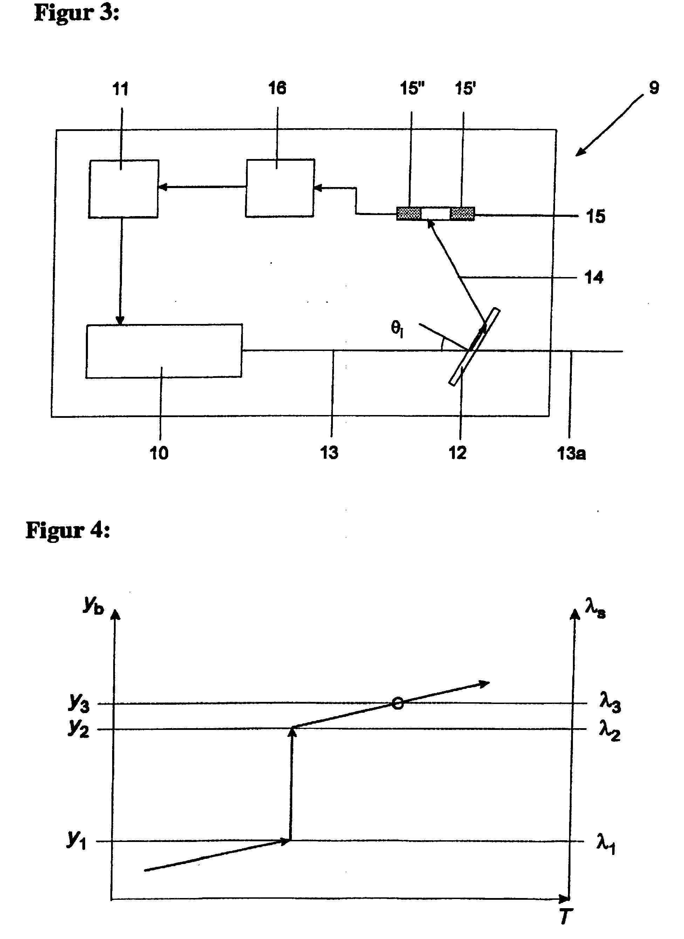

Insbesondere vorzugsweise kann damit eine einfache Mess- und Regelvorrichtung für monochromatische Laserlicht-Dioden geschaffen werden. In Figur 3 ist schematisch der Aufbau einer solchen erfindungsgemässen geregelten Laser-Diode 9 dargestellt. Hier wird die eigentliche Laser-Lichtquelle 10 durch ein Steuergerät 11 betrieben. Derartige Laser-Lichtquellen haben u.A. die Eigenschaft, bei unterschiedlichen Betriebstemperaturen die Wellenlängen zu verändern, wobei diese Veränderung teilweise unstetig verläuft. Wird nun ein erfindungsgemäss aufgebauter Wellenleiter 12 vor der Laser-Lichtquelle positioniert, so wird bei entsprechender Einstellung der Brechungswerte der Wellenleiteranordnung 12 und des Einfallswinkels $\theta_i$ des Lichtbündels 13 im Wellenleiter ein Lichtzeiger 14, wie vorgängig beschrieben, erzeugt. Weiter ist ein photoelektrischer Detektor derart angeordnet, dass dieser Lichtzeiger 14 auf diesen geführt wird. Dieser Detektor kann nun beispielsweise zwei Bereiche 15',15" aufweisen, welche mit einer Auswertungslogik 16 gekoppelt sind. Diese ist wiederum mit dem Steuergerät 11 verbunden. Wenn die Laser-Lichtquelle 10 in Betrieb genommen wird, kann nun die Steuerung derart ausgelegt werden, dass die Lichtquelle 10 ständig aufgeheizt wird.

Weist nun die Lichtquelle 10 beispielsweise die in Figur 4 qualitativ dargestellte Temperatur (T) -

Wellenlängen ($\lambda_s$) Charakteristik auf, so wird sich der Lichtzeiger 14 entsprechend über die Positionen $y_1$ und $y_2$ zur Soll-Position $y_3$ bewegen. Die Steuerlogik 11 kann nun vorteilhafterweise derart ausgelegt werden, dass bei Erreichen der Position $y_3$ die Heizung so geregelt wird, dass die Soll-Position $y_3$ und damit auch die gewünschte Wellenlänge $\lambda_3$ beibehalten wird. Es kann so insbesondere vermieden werden, dass die Diode im instabilen Bereich zwischen $\lambda_1$ und $\lambda_2$ betrieben wird. Damit kann die Laser-Diode durch einfache Mittel innerhalb eines definierten Wellenbereiches geregelt betrieben werden.

Diese Messung kann beispielsweis aber auch lediglich zur Ueberwachung des Zustandes einer Lichtquelle verwendet werden, um Abweichungen von einer Soll-Wellenlänge anzuzeigen.

Je nach Anwendung, speziell bei Lichtbündeln mit sehr kleiner Leistung, kann es auch vorteilhaft sein, den Anteil der in den Wellenleiter 3 eingekoppelten Leistung zu erhöhen. Im Extremfall kann auch praktisch die gesamte Leistung des Lichtbündels zur Messung herangezogen werden. Die Messung ist dann zwar nicht mehr zerstörungsfrei, erlaubt jedoch die Messung von sehr schwachen Lichtbündeln. Das erfindungsgemässe Verfahren erlaubt es in diesem Fall, ausserordentlich kleine, kompakte Spektrometer-Anordnungen zu realisieren, die auch kostengünstig hergestellt werden können, z.B. mittels Replikation in Kunststoff-Substrate (SPIE Vol. 1992 Miniature and Micro-Optics and Micromechachanics (1993)."High-precision molding of integrated optical structures").

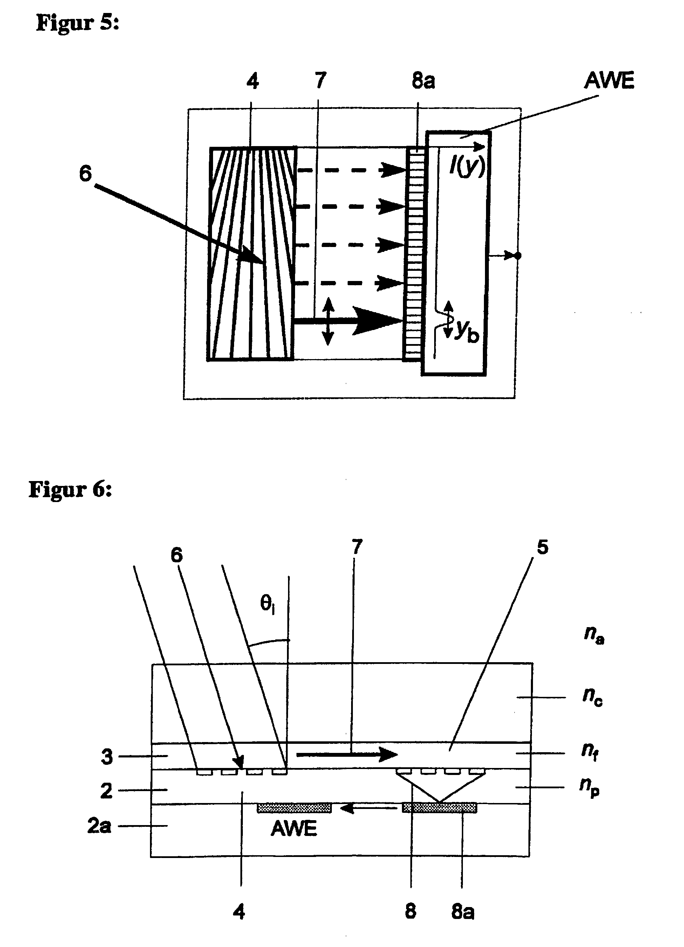

Kann die gesamte Leistung zur Messung herangezogen werden, so können auch Substrate verwandt werden, die nicht transparent sind, dafür aber andere Vorteile bieten. Wird ein geeignetes Material (z.B. ein III-V-Halbleiter) als Substrat benützt, so können alle zur Durchführung des erfindungsgemässen Verfahrens benötigten Elemente monolithisch darauf realisiert werden. Dies betrifft insbesondere den Wellenleiter 3, und das Einkoppelgitter 4. Eine besonders vorteilhafte Variante ist beispielsweise in Figur 5 gezeigt. Diese besteht darin, die Lichtwelle 7 nicht aus dem Wellenleiter 3 auszukoppeln, sondern mittels eines in den Wellenleiter 3 integrierten Detektors 8a direkt zu messen. Somit entfällt das Auskoppelgitter 5. Im weiteren kann auch die Auswerte-Elektronik AWE auf demselben Substrat integriert werden.

Eine weitere monolithische Version ist in Fig. 6 gezeigt. Diese benützt zwar ebenfalls einen Wellenleiter 3 mit Einkoppel- 4 und Auskoppelgitter 5 sowie Lichtwellen 6, 7, und 8 wie die Anordnung gemäss Fig. 1, jedoch ist hier das Substrat in zwei Schichten aufgeteilt, nämlich eine optisch transparente Pufferschicht 2 und das eigentliche Substrat 2a. Dies hat den Vorteil, dass die Auswahl an SubstratMaterialien grösser wird, da dieses nicht mehr transparent sein muss.

Eine besonders vorteilhafte Anordnung kann nun dadurch realisiert werden, dass für das Substrat 2a ein Material (z.B. Silizium) gewählt wird, in welchem sowohl der Detektor 8a, als auch eine elektronische Auswerteeinheit AWE integriert werden können. Im weiteren ist in Fig. 6 auch eine Deckschicht mit Brechzahl $n_c$ gezeigt, welche den Wellenleiter 3 gegen störende Umwelteinflüsse abschirmt und somit die Stabilität und Robustheit der Vorrichtung erhöht.

Geeignete Material-Kombinationen für die verschiedenenen Schichten sind z.B. :

- Silizium, Kunststoffe für das "elektronische" Substrat 2a;
- $SiO_2$ (z.B. thermisch aufgewachsen auf 2a), Kunststoffe als optische Pufferschicht 2 ($n_p$);
- Metalloxide, $Si_3N_4$, Oxinitride, Kunststoffe für den Wellenleiter 3;
- $SiO_2$, Ormocere, Kunststoffe für die Deckschicht ($n_c$);
- Luft, Flüssigkeiten, Vakuum, Kunststoffe als Umgebung ($n_a$).

In den dargestellten Beispielen wurde das Verfahren dazu benützt, die Wellenlänge eines Lichtbündels 6 zu bestimmen. Selbstverständlich können aber, wie eingangs auch darauf hingewiesen, andere Eigenschaften des Lichtbündels 6 gemessen werden. So kann ein solcher Wellenleiter bei Verwendung eines Lichtbündels 6 mit bekannter konstanter Wellenlänge beispielsweise zur Winkelmessung verwendet werden.

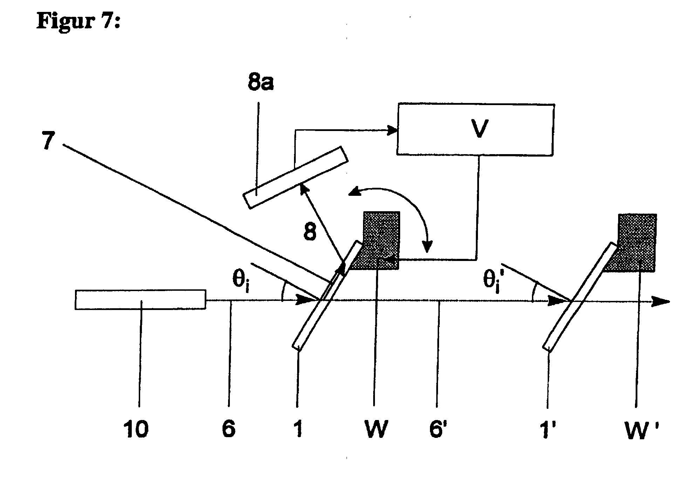

Figur 7 zeigt ein Beispiel, wo die Möglichkeit zur Winkelmessung dazu benützt wird, ein Werkstück W auf einen Laserstrahl auszurichten. Hierzu wird die erfindungsgemässe Vorrichtung 1 am Werkstück W befestigt und die Vorrichtung 1 mit dem Richtlaserstrahl 6 beaufschlagt. Die Vorrichtung 1 funktioniert nun als Winkelgeber mit einer winkelabhängigen Position des Ausgangsbündels 8, welches mittels des Detektors 8a in ein elektrisches Winkelsignal umgewandelt wird. Dieses wird nun zur Regelung des Winkels einer Vorrichtung V zur Einstellung des Winkels des Werkstücks W zugeführt. Falls nur ein Werkstück W ausgerichtet werden muss, ist eine zerstörungsfreie Messung nicht notwendig, und Varianten wie in Fig. 5 und 6 dargestellt können angewandt werden. Falls jedoch mehrere Werkstücke W,W' auf denselben Laserstrahl ausgerichtet werden sollen, so kann dies mit Hilfe der zerstörungfrei arbeitenden Varianten direkt ohne weitere Hilfsmittel durch einfaches Hintereinanderschalten erfolgen (der durch die Vorrichtung 1 transmittierte Strahl ist gleichzeitig der Eintrittsstrahl 6' für die Vorrichtung 1', die am nächsten werkstück W' angebracht ist).

Wie eingangs erwähnt wurde, kann das erfindungsgemässe Verfahren auch mit zeitabhängigen Resonanzbedingungen realisiert werden.

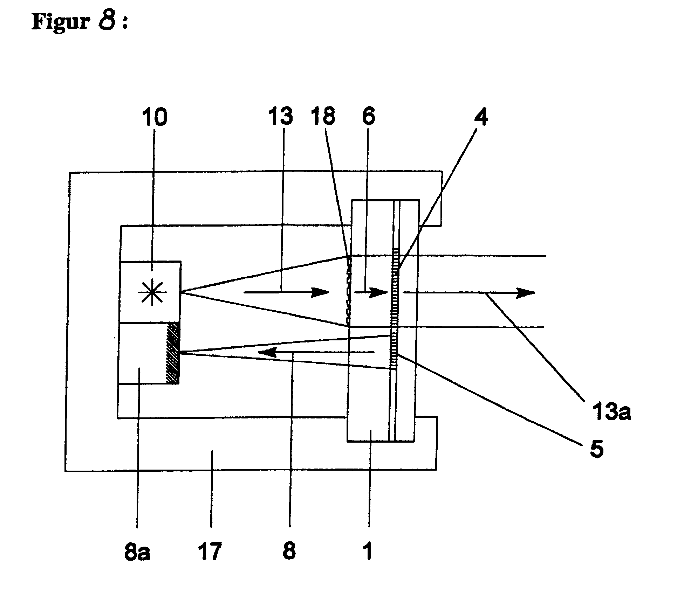

Figur 8 zeigt eine besonders interessante Anordnung zur Stabilisierung bzw. Regelung der Wellenlänge oder des Winkels eines von einer Lichtquelle 10 erzeugten Lichtbündels 13, in welcher die erfindungsgemässe Vorrichtung 1 gleichzeitig als Fenster eines hermetisch dichten Gehäuses 17 dient, welches die Lichtquelle 10, vorzugsweise einen Laser, und den Detektor 8a enthält. Die weiteren zur Regelung notwendigen Komponenten können sich innerhalb oder ausserhalb des Gehäuses 17 befinden. Im weiteren bietet sich die Möglichkeit, mindestens eine optische Komponente zur Strahlumformung (z.B. Kollimation in einen Strahl 13a) direkt auf dem Substrat zu realisieren (z.B. durch Mikrostrukturierung oder entsprechende Formgebung). Da kommerzielle gekapselte Lichtquellen, insbesondere Laserdioden, ohnehin ein Fenster benötigen, kann somit eine ultrakompakte, kostengünstig herstellbare geregelte Miniatur-Lichtquelle geschaffen werden.

Weitere Varianten können auch erhalten werden, indem die Resonanzbedingung in Transmission statt Reflexion benutzt wird. Alle diese Anordnungen, insbesondere die in den Figuren als Beispiele dargestellten Anordnungen, können auch mittels planaren Wellenleitern statt Streifen-Wellenleitern realisiert werden.

Der große Vorteil des erfindungsgemässen Verfahrens und der erfindungsgemäss ausgebildeten Wellenleiter besteht im einfachen und preiswerten Aufbau, der hohen Auflösung sowie der Möglichkeit, zerstörungsfrei zu messen, falls es die Anwendung erfordert.

## Patentansprüche

1. Verfahren zur Bestimmung der Wellenlänge eines optischen Lichtbündels (6), wobei das Lichtbündel (6) auf einen Wellenleiter (3) beaufschlagt wird, welcher örtlich und/oder zeitlich variierende, definierte Resonanzbedingungen aufweist, wodurch sich bei Auftreten von Resonanz im Lichtleiter eine Lichtwelle (7) aufbaut, **dadurch gekennzeichnet, dass** die örtliche Variation der Resonanzbedingung durch eine örtlich variierende Periodizität ($\Lambda(y)$) eines Gitterkopplers (4) erreicht wird und die Lichtwelle (7) mittels eines weiteren Gitterkopplers (5) aus dem Lichtleiter (3) herausgeführt und einem Detektor (8a) zugeführt wird.

2. Verfahren nach Anspruch 1, **dadurch gekennzeichnet, dass** die zeitliche Variation der Resonanzbedingung durch eine zeitliche Variation der Wellenleiter-Eigenschaften erreicht wird.

3. Verfahren nach einem der Ansprüche 1 bis 2, **dadurch gekennzeichnet, dass** der weitere Gitterkoppler (5) mit örtlich variierender Periodizität verwendet wird.

4. Verfahren nach Anspruch 3, **dadurch gekennzeichnet, dass** der Gitterkoppler (5) mit abbildenden, d.h. fokussierenden Eigenschaften verwendet wird.

5. Wellenleiter zur Durchführung des Verfahrens nach einem der Ansprüche 1 bis 4, welcher sich auf einem Substrat (2) befindet, **dadurch gekennzeichnet, dass** der Wellenleiter (3) wenigstens auf einer Seite an seiner Oberfläche mindestens zwei örtlich getrennte Bereiche mit Beugungsgittern (4;5) aufweist, welche örtlich variierende Linienabstände aufweisen, sowie auf seiner dem Substrat (2) abgewandten Oberfläche ein Umgebungsmedium mit definiertem, von Umgebungseinflüssen weitgehend unabhängigem Brechungsindex ($n_c$) aufweist.

6. Wellenleiter nach Anspruch 5, **dadurch gekennzeichnet, dass** mindestens ein Aus- und Einkoppelgitter vorgesehen sind, wobei das Auskoppelgitter dem Einkoppelgitter örtlich überlagert ist.

7. Wellenleiter nach einem der Ansprüche 5 bis 6, **dadurch gekennzeichnet, dass** der Wellenleiter (1) selbst Auswertungsbausteine (AWE) aufweist

8. Wellenleiter nach einem der Ansprüche 5 bis 7, **dadurch gekennzeichnet, dass** auf beiden Seiten des Wellenleiters (3) Medien, wie Substrate, mit bekannten optischen Eigenschaften ($n_c$, $n_a$, $n_p$) angeordnet sind.

9. Wellenleiter nach Anspruch 8, **dadurch gekennzeichnet, dass** der Wellenleiter (3) selbst oder/und mindestens ein Medium zeitlich und/oder räumlich variierbare optische Eigenschaften aufweist.

10. Anwendung des Verfahrens nach einem der Ansprüche 1 bis 4 für die Steuerung resp. Regelung der Wellenlänge oder der Richtung von Lichtbündeln (6), **dadurch gekennzeichnet, dass** die Lichtwelle (7;8) auf ein Detektorelement (8a) geführt wird, das entsprechend dem Auftreffen der Lichtwelle (7;8) ein Signal an ein Steuer- oder Regelelement (AWE) übergibt, welches entsprechend dem Signal die Erzeugung des Lichtbündels (6) derart beeinflusst, dass die Wellenlänge bzw. die Richtung resp. der Auftreffwinkel des Lichtbündels (6) erhöht resp. erniedrigt resp. konstant gehalten wird.

11. Anwendung des Verfahrens nach einem der Ansprüche 1 bis 4 für die Stabilisierung der Wellenlänge oder des Winkels eines von einer Lichtquelle erzeugten Lichtbündels, **dadurch gekennzeichnet, dass** die Wellenleiteranordnung (1) als Fenster eines Gehäuses angeordnet wird, durch welches das Lichtbündel aus diesem Gehäuse austritt.

12. Anwendung nach Anspruch 11, **dadurch gekennzeichnet, dass** die Wellenleiteranordnung (1) selbst mit mindestens einem strahlformenden optischen Element ausgestattet wird.

## Claims

1. Process for determining the wavelength of an optical light beam (6) where the light beam (6) is projected onto a waveguide (3) which has locally and/or temporally varying defined resonance conditions, whereby on the occurrence of resonance in the waveguide a light wave (7) is generated, **characterised in that** the local variation of the resonance condition is achieved by a locally varying periodicity (A(y)) of a grating coupler (4) and the light wave (7) is guided out of the waveguide (3) by means of a further grating coupler (5) and supplied to a detector (8a).

2. Process according to claim 1, **characterised in that** the temporal variation of resonance condition is achieved by a temporal variation in waveguide properties.

3. Process according to any of claims 1 to 2, **characterised in that** the further grating coupler (5) with locally varying periodicity is used.

4. Process according to claim 3, **characterised in that** the grating coupler (5) with imaging i.e. focussing properties is used.

5. Waveguide for performance of the process according to any of claims 1 to 4, which is located on a substrate (2), **characterised in that** the waveguide (3) at least on one side has on its surface at least two locally separate areas with diffraction gratings (4; 5) with locally varying line intervals, and on its surface far side of the substrate (2) a surrounding medium with defined refractive index ($n_c$) largely independent of environmental influences.

6. Waveguide according to claim 5, **characterised in that** at least one decoupling and one coupling grating are provided where the decoupling grating is locally superposed over the coupling grating.

7. Waveguide according to any of claims 5 to 6, **characterised in that** the waveguide (1) itself comprises analysis modules (AWE).

8. Waveguide according to any of claims 5 to 7, **characterised in that** on both sides of the waveguide (3) are arranged media, as substrates, with known optical properties ($n_c$, $n_a$, $n_p$).

9. Waveguide according to claim 8, **characterised in that** the waveguide (3) itself and/or at least one medium has/have optical properties which can be varied temporally and/or spatially.

10. Use of the process according to any of claims 1 to 4 for controlling or regulating wavelengths or the direction of light beams 6, **characterised in that** the light wave (7; 8) is guided to a detector element (8a) which according to the incidence of the light wave (7; 8) transmits a signal to a control or regulator element (AWE) which influences according to the signal the generation of the light beam (6) such that the wavelength or direction or angle of incidence of the light beam (6) is raised or lowered or held constant.

11. Use of the process according to any of claims 1 to 4 to stabilise the wavelength or angle of a light beam generated by a light source, **characterised in that** the waveguide arrangement (1) is arranged as an aperture of a housing through which the light beam emerges from the housing.

12. Use according to claim 11, **characterised in that** the waveguide arrangement (1) is itself equipped with at least one beam-forming optical element.


**Revendications**

1. Procédé pour déterminer la longueur d'onde d'un faisceau lumineux optique (6), dans lequel le faisceau lumineux (6) est dirigé sur un guide d'ondes (3) qui présente des conditions de résonance définies variant localement et/ou dans le temps, ce qui produit, lors de l'apparition de résonance, une onde lumineuse (7) dans le guide d'ondes, **caractérisé en ce que** la variation locale de la condition de résonance est réalisée par une périodicité ($\Lambda(y)$) d'un coupleur de réseau (4) et **en ce que** l'onde lumineuse (7) est sortie du guide d'ondes (3) au moyen d'un autre coupleur de réseau (5) pour être dirigée sur un détecteur (8a).

2. Procédé selon la revendication 1, **caractérisé en ce que** la variation dans le temps de la condition de résonance est réalisée par une variation dans le temps des caractéristiques du guide d'ondes.

3. Procédé selon l'une des revendications 1 à 2, **caractérisé en ce que** ledit autre coupleur de réseau (5) est utilisé avec une périodicité variant localement.

4. Procédé selon la revendication 3, **caractérisé en ce que** ledit coupleur de réseau (5) est utilisé avec des caractéristiques faisant une image, c'est-à-dire focalisantes.

5. Guide d'ondes pour la mise en oeuvre du procédé selon l'une des revendications 1 à 4, guide se trouvant sur un substrat, **caractérisé en ce que** le guide d'ondes (3) présente sur au moins un côté sur sa surface au moins deux zones localement séparées avec des réseaux de diffraction (4, 5) qui présentent des distances entre les lignes variant localement, ainsi que sur sa surface opposée au substrat (2) un milieu environnant avec un indice de réfraction ($n_c$) défini essentiellement indépendant de toute influence de l'environnement.

6. Guide d'ondes selon la revendication 5, **caractérisé par** au moins un coupleur de réseau et un découpleur de réseau, ledit découpleur de réseau étant localement superposé au coupleur de réseau.

7. Guide d'ondes selon l'une des revendications 5 à 6, **caractérisé en ce que** le guide d'ondes (1) lui-même comprend des éléments d'évaluation (AWE).

8. Guide d'ondes selon l'une des revendications 5 à 7, **caractérisé en ce que** des milieux, comme des substrats, avec des caractéristiques optiques connues, sont arrangés sur les deux faces du guide d'ondes.

9. Guide d'ondes selon la revendication 8, **caractérisé en ce que** le guide d'ondes (3) directement ou/et au moins un des milieux présente des caractéristiques optiques variant dans le temps et/ou localement.

10. Applications du procédé selon l'une des revendications 1 à 4 pour la commande resp. le réglage de la longueur d'onde ou de la direction de faisceaux lumineux (6), **caractérisée en ce que** l'onde lumineuse (7, 8) est dirigée sur un élément détecteur (8a) qui transmet un signal correspondant à l'impact de l'onde lumineuse (7, 8) à un élément de commande ou de réglage (AWE), qui à son tour influence en fonction du dit signal la production du faisceau lumineux (6) de telle manière que la longueur d'onde resp. la direction resp. l'angle d'impact du faisceau lumineux (6) est augmenté resp. diminué resp. gardé constant.

11. Application du procédé selon l'une des revendications 1 à 4 pour stabiliser la longueur d'onde ou l'angle d'un faisceau lumineux produit par une source lumineuse, **caractérisé en ce que** la disposition de guide d'ondes (1) est faite sous forme d'une fenêtre d'un boîtier par laquelle le faisceau lumineux quitte le boîtier.

12. Application selon la revendication 11, **caractérisée en ce que** la disposition du guide d'ondes (1) elle-même est munie d'au moins un élément optique for-

**EP 0 795 121 B1**

mant des rayons.

**Figur 1:**

**Figur 2:**

## Figur 3:

11      16      15"  15'      9

15

14

$\theta_1$

10      13      12      13a

## Figur 4:

$y_b$      $\lambda_s$

$y_3$      $\lambda_3$

$y_2$      $\lambda_2$

$y_1$      $\lambda_1$

$T$

**Figur 5:**

**Figur 6:**

## Figur 7:

Figur 8 :